# EUROPÄISCHE PATENTSCHRIFT

(11) **EP 1 008 768 B1**
(45) Veröffentlichungstag und Bekanntmachung des Hinweises auf die Patenterteilung: **19.03.2003**
(21) Anmeldenummer: 98123375.2
(22) Anmeldetag: 08.12.1998
(51) Int. Cl.: F16B 12/40, F16B 12/46

(54) **Lösbare Bambusrohrverbindung**
Releasable bamboo tube joint
Joint détachable pour des tubes de bambou

(43) Veröffentlichungstag der Anmeldung: 14.06.2000
(73) Patentinhaber: Schmidmeier, Alexander, 7524 Zuoz (CH)
(72) Erfinder: Schmidmeier, Alexander, 7524 Zuoz (CH)
(74) Vertreter: Alber, Norbert, Dipl.-Ing.

(56) Entgegenhaltungen:
- FR-A- 1 596 253
- US-A- 4 261 665
- US-A- 4 701 065
- US-A- 4 846 600

## Beschreibung

### I. Anwendungsgebiet

Die Erfindung betrifft lösbare Bambusrohrverbindungen, wie sie benötigt werden, um aus Bambusrohren Möbel zu produzieren.

Dabei werden z. B. Betten, Sofas, Sessel etc. aus Bambusrohren zusammengesetzt.

### II. Technischer Hintergrund

Das Problem besteht jedoch darin, daß der Versand z. B. eines Bettes im fertig montierten Zustand ein sehr großes Transportvolumen benötigt, und damit hohe Transportkosten nach sich zieht.

### III. Darstellung der Erfindung

### a) Technische Aufgabe

Es besteht daher die Aufgabe, lösbare Bambusrohrverbindungen, und zwar sowohl Schrägverbindungen als auch für fluchtende Längsverbindungen, zu schaffen, die einen Versand der aus Bambusrohren bestehenden Möbel in Teilen oder gar in einzelnen Bambusrohren ermöglicht, sowie den einfachen, schnellen und hochstabilen Zusammenbau zum fertigen Möbelstück vor Ort, was durch die klassischen Verbindungstechniken (vor allem Verschnüren mittels Rattan oder anderen natürlichen bandartigen Materialien) nicht möglich ist.

Weiterhin ist es gemäß US 4701065 bekannt, Eckverbindungen aus Bambusrohren, bei denen ein Bambusrohr stumpf auf ein durchgehendes anderes Bambusrohr trifft, herzustellen, in dem ein Längseinsatzteil, dort das Teil 20, im stumpf endenden Rohr eingebracht und mit dem durchgehenden Rohr verbunden wird.

Allerdings ist gemäß US 4701065 das Einbringen eines Sackloches entsprechend dem Durchmesser des stumpf endenden Rohres in der Mantelfläche des durchgehenden Rohres notwendig, dessen Boden dann gegen die Stirnfläche des stumpf endenden Rohres gepresst wird.

### b) Lösung der Aufgabe

Diese Aufgabe wird durch die Merkmale der Ansprüche 1 gelöst. Vorteilhafte Ausführungsformen ergeben sich aus den Unteransprüchen.

Die häufigste benötigte Verbindungsart ist eine insbesondere rechtwinklige Eckverbindung. Im Gegensatz zum Möbelbau unter Verwendung von plattenförmigen Materialien, indem häufig die Platten im Eckbereich auf Gehrung zueinander gesetzt werden, werden Bambusrohre in der Regel stumpf aneinander gestoßen, wobei die Stirnfläche des ersten, stumpf auf das zweite Bambusrohr auftreffenden, Bambusrohres entweder plan abgelängt sein kann oder eine rinnenförmige Vertiefung in Anpassung an die Außenkontur des anderen Bambusrohres aufweisen kann.

Eine Lösung besteht in einem Längsverbinder, der sich in Längsrichtung des einen Bambusrohres, insbesondere in dessen Zentrum, bis in das andere Bambusrohr hinein erstreckt und seinen Halt in fest mit den Bambusrohren angeordneten Einsatzteilen findet, die in der Regel aus Holz bestehen und im Inneren der Bambusrohre fest angeordnet werden.

Als Längsverbinder kann dabei eine Schraube benutzt werden, was ein beliebig starkes, auf jeden Fall spielfreies, Aneinanderziehen der beiden Rohre ermöglicht, oder es können formschlüssig durch den Längsverbinder durchgesteckte Querdübel verwendet werden.

### c) Ausführungsbeispiele

Ausführungsformen gemäß der Erfindung sind im folgenden anhand der Figuren beispielhaft näher beschrieben. Es zeigen:
- Fig. 1:: eine innen liegende Eckverbindung mit formangepaßten Rohren,
- Fig. 2:: die gleiche Eckverbindung bei nicht angepaßten Rohren,
- Fig. 3:: eine andere innen liegende Eckverbindung mit angepaßten Rohren,
- Fig. 4:: die Eckverbindung gemäß Fig. 3 mit nicht angepaßten Rohren,
- Fig. 5:: eine innen liegende Eckverbindung ausschließlich mittels Querdübeln.

Das grundsätzliche Problem der Verbindung von Bambusrohren besteht darin, daß Bambusrohre im Naturzustand im wesentlichen hohl sind und nur in bestimmten Längsabständen Querwände aufweisen, diese Querwände jedoch für die Verwendung der Bambusrohre für den Möbelbau oft auch noch entfernt werden, um eine Rißbildung der Rohre zu verhindern.

Damit sind die verwendeten Bambusrohre im Inneren sogar oft vollständig hohl. Dennoch ist beabsichtigt, die Rohrverbindungen so weit als möglich unsichtbar für den Betrachter anzuordnen. In aller Regel bedeutet dies, daß die Eckverbindung weitestgehend im Rohrinneren angeordnet werden muß.

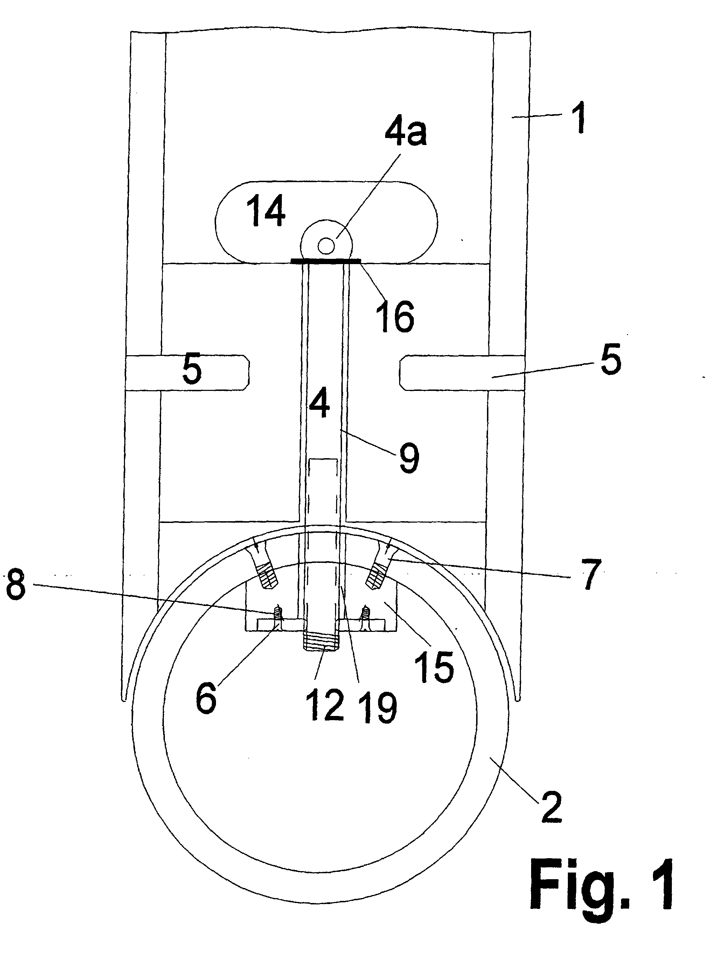

So zeigt Fig. 1 ein erstes Bambusrohr 1 im Längsschnitt, dessen stirnseitiges Ende in der Form einer Hohlkehle an den Außenumfang eines hierzu quer verlaufenden Bambusrohres 2 mit etwa gleichem Durchmesser auf dessen Mantelfläche endet.

Zur Verbindung der Bambusrohre 1 und 2 ist ein Längseinsatzteil 3 in Form eines zylindrischen Holzstückes, dessen Außendurchmesser an den Innendurchmesser das Bambusrohres 1 angepaßt ist und in diesen von der freien Stirnseite her eingeschoben wurde, im Inneren das Bambusrohres 1 befestigt, indem von außen durch das Bambusrohr 1 zwei Querdübel 5 durch die Wandung des Rohres 1 sowie in das Längseinsatzteil 3 hinein gesteckt und dort ggf. verklebt sind, wie auch ggf. der Außenumfang des Längseinsatzteiles 3 am Innenumfang des Rohres 1 verklebt ist. Dabei ist die Längsposition des Längseinsatzteiles 3 im Rohr 1 so gewählt, daß bei Herandrücken des Rohres 2 dieses Rohr 2 mit seiner Mantelfläche gegen die Stirnfläche des Längseinsatzteiles 3 drückt, gegen die in der Kontur angepaßte Stirnfläche des Rohres 1 dagegen nicht angepreßt wird, um ein Spalten des Rohres 1 zu vermeiden.

Die Verbindung erfolgt durch eine Längsschraube 4, die durch eine zentral im Längseinsatzteil 3 angeordnete etwas größere Längsbohrung 9 von der vom Rohr 2 abgewandten Seite her eingeschoben wird, so daß der Kopf 4a der Längsschraube 4 mittels einer Beilagscheibe 16 sich an der vom Rohr 2 abgewandten Stirnfläche des Längseinsatzteiles 3 abstützt. Die Längsschraube 9 ist so lang, daß sie das Längseinsatzteil vollständig durchdringt und bis ins Innere des Rohres 2 hinein ragt. Am freien Ende, also im Inneren des Rohres 2, wird die Längsschraube 4 mittels einer Mutter 6 verspannt, welche sich jedoch nicht direkt auf der Innenfläche des Rohres 2 abstützt, sondern aus Gründen einer Kraftverteilung und Verringerung der Flächenpressung an einem Quereinsatzteil 15, welches auf den Innendurchmesser des zweiten Rohres 2 im Bereich der Durchdringung durch die Längsschraube 4 aufgesetzt ist. Das Quereinsatzteil 15 weist zu diesem Zweck insbesondere auf der der Innenwandung des Rohres 2 zugewandten Seite eine Außenkontur auf, die dieser Innenkontur entspricht, auf der gegenüberliegenden Seite, auf welcher sich die Mutter 6 abstützt, dagegen eine ebene Fläche auf zum Abstützen der Mutter 6, oder auch eine Versenkung zum Einsetzen der Mutter 6. In diesem Fall ist die Mutter 6 vorzugsweise zusätzlich über Mutterschrauben 8 im Quereinsatzteil 15 gesichert, ebenso wie dieses Quereinsatzteil 15 durch Befestigungsschrauben 7, die durch das Rohr 2 von außen in das Quereinsatzteil 15 getrieben sind, gesichert ist. Die Mutter 6 kann auch eine Einschlagmutter sein.

Quereinsatzteil 15 und die dem Rohr 1 zugewandte Wandung des Rohres 2 wiesen dabei ebenfalls eine durchgehende Querbohrung 19 für das Hindurchstecken der Längsschraube 4 auf, die zu diesem Zweck entsprechend dimensioniert und positioniert ist.

Die Befestigungsschrauben 7 liegen dabei außerhalb der Querbohrung 19, jedoch innerhalb des Auftreffbereiches des Rohres 1 auf das Rohr 2, und sind damit für den Betrachter nicht sichtbar.

Die Verbindung wird gespannt, indem die Längsschraube 4 in die drehfest im Quereinsatzteil 15 fixierte Mutter 6 eingeschraubt ist. Zu diesem Zweck ist in der Wandung des Rohres 1 im Bereich des Kopfes 4a der Längsschraube 4 eine Wandöffnung 14 vorhanden, um den Kopf 4 mit einem Werkzeug, beispielsweise einem Durchsteckdorn, erreichen zu können. In diesem Fall weist der Schraubenkopf 4a eine entsprechende Öffnung zum Einstecken des Dornes auf.

Die Wandöffnung 14 wird dabei vorzugsweise auf derjenigen Seite des Rohres 1 eingebracht, die bei dem fertigen Möbelstück vom Betrachter nicht zu erkennen ist, also bei einem Bettgestell beispielsweise im Innenwinkel der so erstellten Eckverbindung.

Zusätzlich sind die offenen Enden der Bambusrohre durch Rattangeflecht, Holzmodelle oder andere geeignete Abschlüsse abgedeckt, in diesem Fall also das offene Ende des Rohres 2, so daß auch das dort vorhandene Quereinsatzteil 15 und die Mutter 6 sowie das freie Ende der Längsschraube 4 nicht zu sehen sind.

Für die Montagereihenfolge ist es deshalb wichtig, beim Rohr 2 das Quereinsatzteil 15 mit der Mutter 6 im Inneren des Rohres 2 zu befestigen, einschließlich der Querbohrungen 19 im Rohr 2 und im Quereinsatzteil 15, bevor dieses Rohr 2 durch Rattangeflecht am freien Ende verschlossen wird.

Anschließend wird das Rohr 2 an das Rohr 1 herangedrückt, und die Längsschraube 4 durch die Wandöffnung 14 hindurch ins Innere des Rohres 1 verbracht und in die Längsbohrung 9 des Längseinsatzteiles 3 eingesteckt und in der Mutter 6 festgezogen, wodurch die Verbindung hergestellt ist.

Anschließend kann - aus optischen Gründen - die Wandöffnung 14 durch eine Messingplatte, ein paßgenaues Bambuseinsatzteil oder Ähnliches verschlossen werden.

Wenn dagegen ein stirnseitiges Verschließen des Rohres 2, in welchem sich das Quereinsatzteil 15 befindet, nicht notwendig ist, beispielsweise weil das Rohr 2 ein senkrechtes Rohr ist, welches mit seiner unteren Stirnfläche auf dem Untergrund aufsteht und deshalb offen bleiben kann, können durch die freibleibende Öffnung des Rohres 2 hindurch eine Mutter 6 lose auf die Längsschraube 4 aufgebracht und festgezogen werden. In diesem Fall muß die Längsschraube 4 dann jedoch drehfest im Längseinsatzteil 3 angeordnet sein, beispielsweise indem sie einen teilweise unrunden Schacht aufweist, der damit formschlüssig in einer entsprechend geformten Längsbohrung 9 sitzt, oder indem Vorsprünge, Zacken oder Ähnliches von der Ansatzfläche des Kopfes 4a an die entsprechende Stirnfläche des Längseinsatzteiles 3 beim Festziehen gepreßt werden und sich dort verkrallen.

Durch eine solche lose aufgeschraubte Mutter 6 kann auf die Wandöffnung 14 im Rohr 1 unter Umständen verzichtet werden.

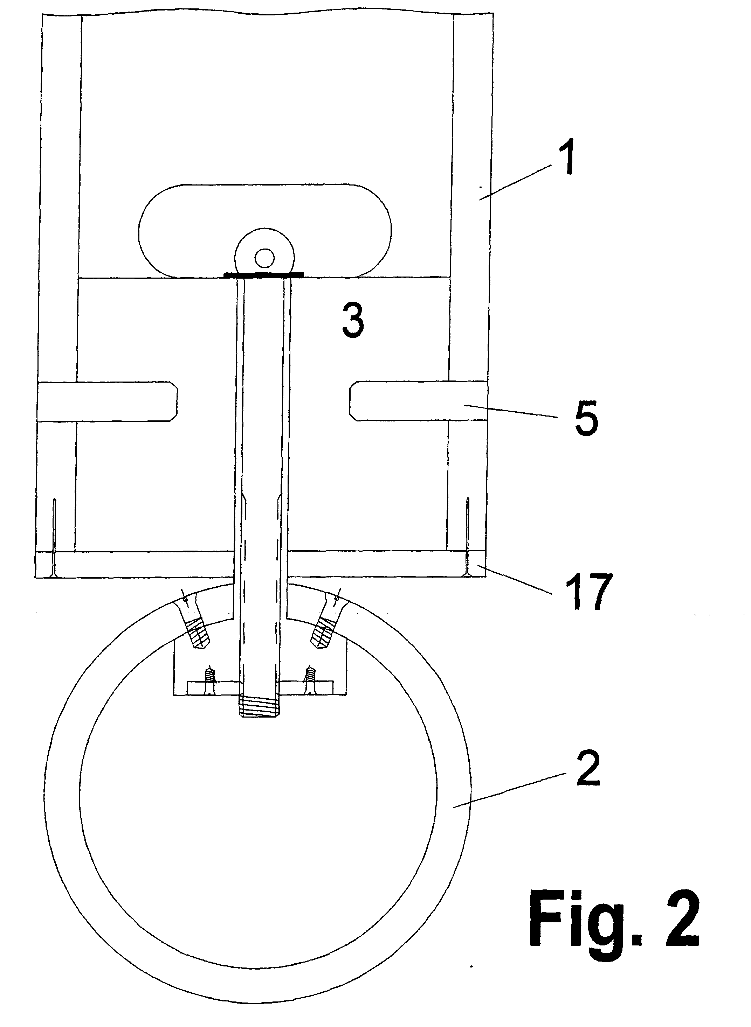

Die Lösung gemäß Fig. 2 unterscheidet sich von derjenigen der Fig. 1 dadurch, daß das Rohr 1 an seinem Ende Stirnseitig nicht an die Mantelaußenfläche des Rohres 2 rinnenförmig angepaßt ist, sondern das Rohr 1 stirnseitig eben, also im rechten Winkel zur Längsachse des Rohres 1, endet, und dort mittels einer auf das Rohr 1 Stirnseitig aufgesetzten insbesondere verschraubten Stirnplatte 17, deren Außenumfang dem Außenumfang des Rohres 1 entspricht, verschlossen ist. Die Stirnplatte 17 ist durch längs in die Wandung eingeschraubte Schrauben fixiert oder am Rohr 1 verklebt. Vorzugsweise schließt sich dabei das Längseinsatzteil 3 unmittelbar an die Stirnplatte 17 an, und kann - anstelle oder zusätzlich der dargestellten Querdübel 5 - auch mit der Stirnplatte 17 verschraubt sein oder einstückig zusammen mit der Stirnplatte 17 ausgebildet sein. Auch ein Weglassen der Stirnplatten 17 und die Verwendung eines optisch ausreichend exakt eingepaßten Längseinsatzteiles 3 ist möglich.

Das Längseinsatzteil 3 muß - bei allen dargestellten Bauformen - im übrigen nicht exakt eine Außenkontur aufweisen, die der Innenkontur des Rohres 1 entspricht. Auch eine viereckige Kontur des Längseinsatzteiles 3 mit z. B. gekappten Ecken ist möglich, solange eine drehfeste Verbindung zwischen Längseinsatzteil 3 und Rohr 1 mittels Querdübel 5 oder anderer Fixierungsmöglichkeiten erzielbar ist.

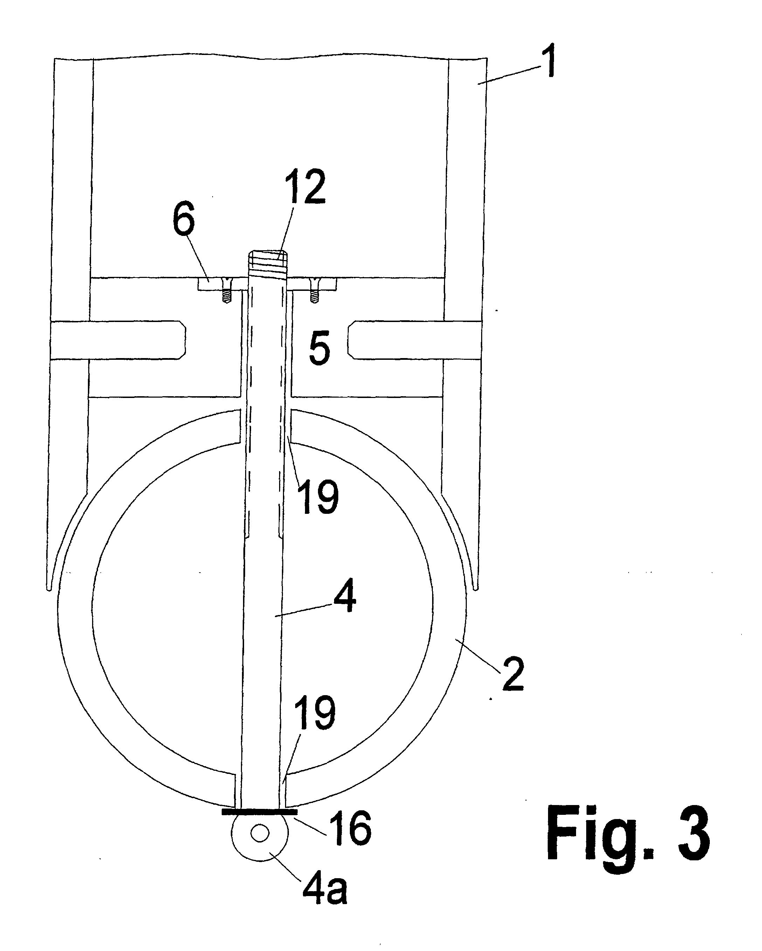

Die Lösung gemäß Fig. 3 unterscheidet sich von derjenigen der Fig. 1 durch die Einführrichtung der Längsschraube 4.

Auch bei Fig. 3 ist das stirnseitige Ende des Rohres 1 an die Außenkontur des Rohres 2 rinnenförmig angepaßt. Die Längsschraube 4 ist jedoch von der Seite des Rohres 2 her eingebracht, während sich die Mutter 6 in der dem Rohr 2 abgewandten Stirnseite des Längseinsatzteiles 3 befindet.

In Fig. 3 ist die Längsschraube 4 von der vom Rohr 1 abgewandten Seite des Rohres 2 aus in das Rohr 2 eingebracht, so daß es die Wandungen des Rohres 2 auf beiden Seiten durchdringt und der Kopf 4a auf der dem Rohr 1 abgewandten Umfangsseite des Rohres 2 aus diesem vorsteht und sich dort am Außenumfang abstützt.

Es ist jedoch auch möglich, die Längsschraube 4 wesentlich kürzer auszubilden, so daß sich deren Kopf 4a im Inneren des Rohres 2 befindet und dort -. ggf. an einem Quereinsatzteil 15 wie in Fig. 1 und 2 vorhanden - abstützt.

Die Längsschraube 4 muß dann allerdings vom freien Ende des Rohres 2 aus eingebracht werden, was nur bei einem auf Dauer offen bleibenden Ende des Rohres 2 möglich ist.

Auch in Fig. 3 ist die Mutter 6 drehfest im Längseinsatzteil 3 fixiert.

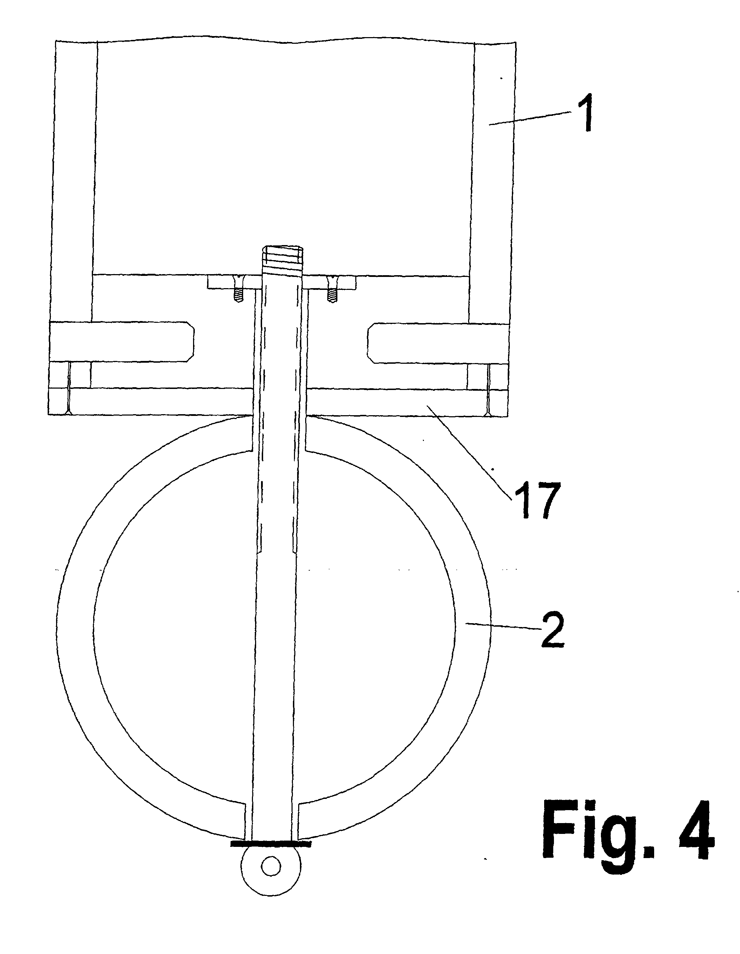

Fig. 4 unterscheidet sich von der Lösung gemäß Fig. 3 wiederum darum, daß das Rohr 1 Stirnseitig nicht an die Außenkontur des Rohres 2 rinnenförmig angepaßt, sondern plan abgelenkt und mittels Stirnplatte 17 verschlossen ist. Es gilt in diesem Fall das bezüglich der Stirnplatte und des Rohres 1 zu Fig. 2 Gesagte.

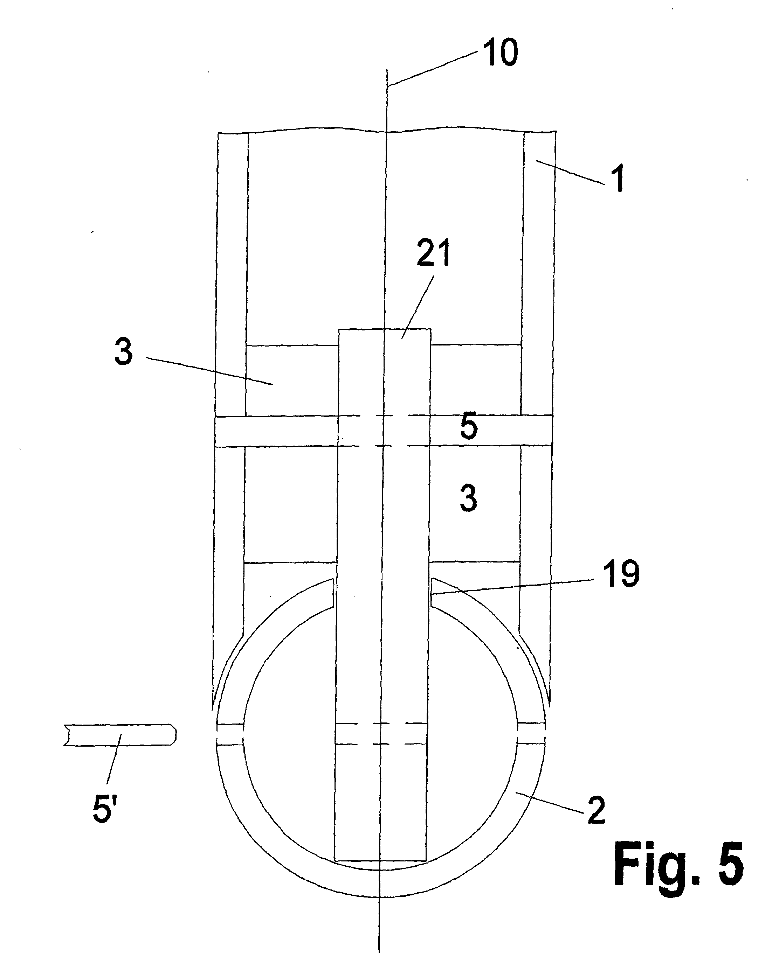

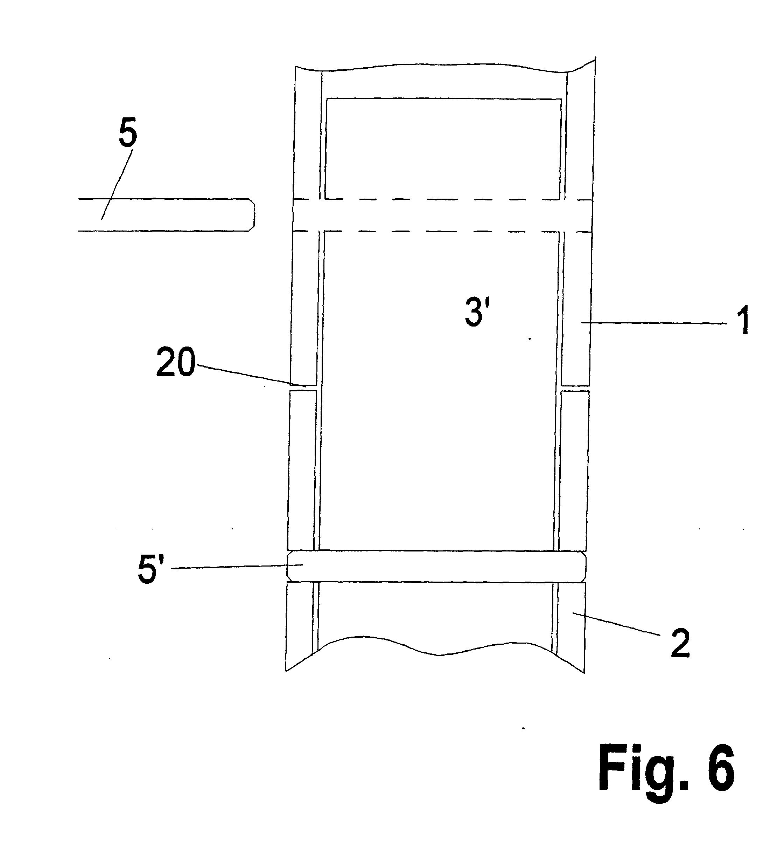

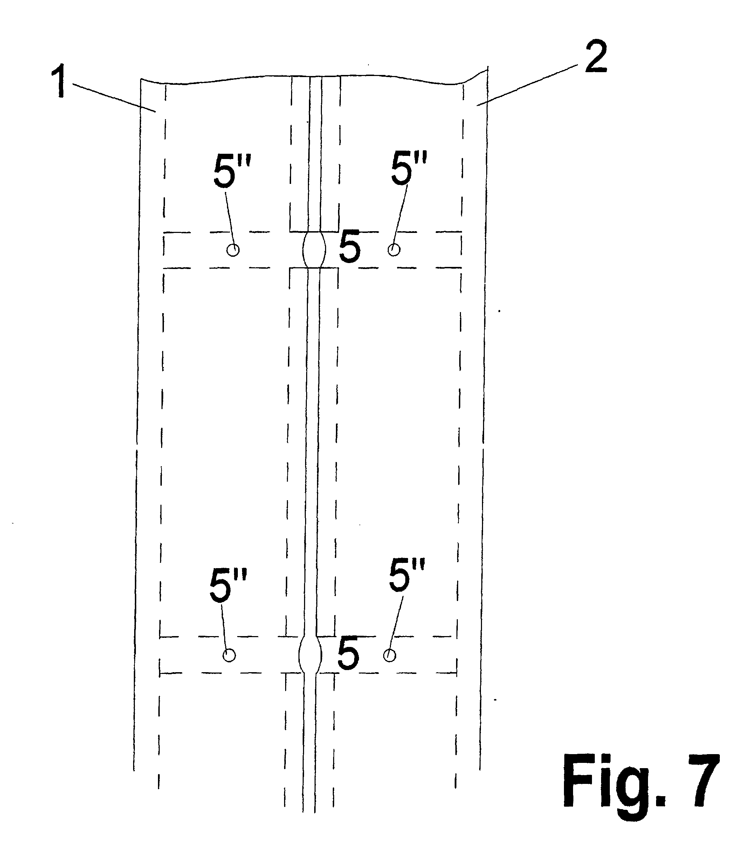

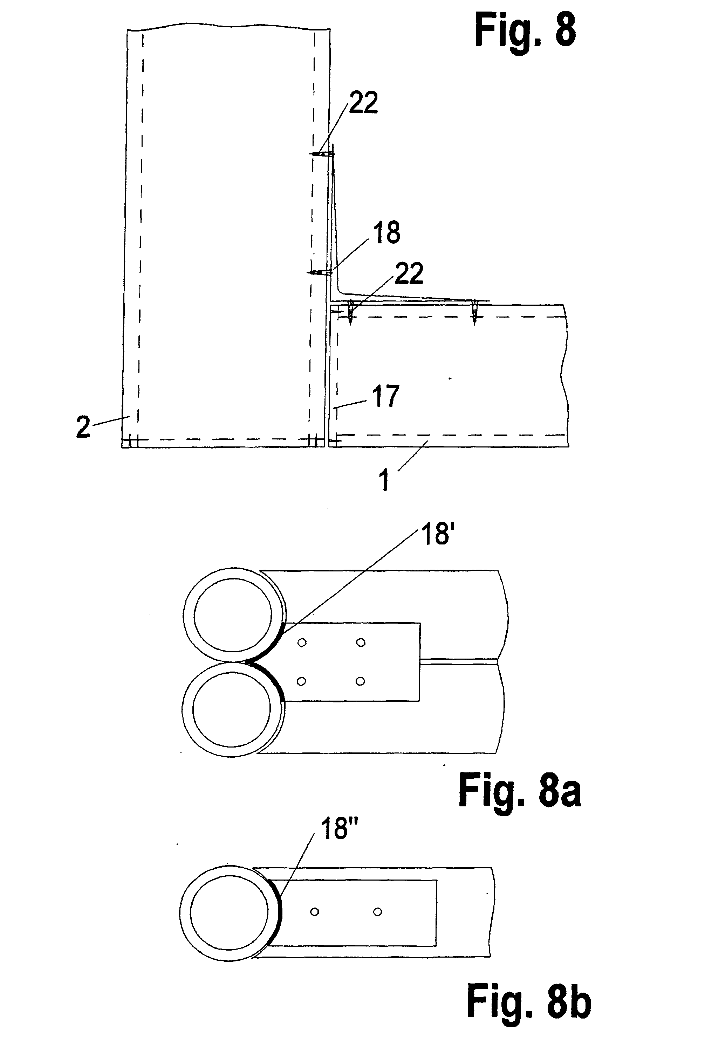

Fig. 5 zeigt eine Lösung ähnlich Fig. 1, wobei jedoch als Längsverbinder nicht eine Längsschraube 4 verwendet ist, sondern ein Längsdübel 21, der in Längsrichtung 10 fixiert ist und in Richtung auf das Rohr 2 soweit vorsteht, daß es ins Innere des Rohres 2 bis nahe an die gegenüberliegende Wandung des Rohres 2 reicht.

Der Längsdübel 21 ist im Längseinsatzteil 3 und dieses wiederum im Rohr 1 drehfest fixiert durch einen Querdübel 5, der alle drei Teile von der einen bis zur anderen Seite des Rohres 1 durchdringt. Die Querbohrung 19 in der einen Wandung des Rohres 2 ist ausreichend groß dimensioniert, um den Längsdübel 21 hindurchtreten zu lassen.

Die Fixierung des Längsdübels 21 im Rohr 2 erfolgt durch das Hindurchschieben eines weiteren Querdübels 5' vorzugsweise parallel zum ersten Querdübel 5, jedoch diesmal durch das Rohr 2 hindurch, und zwar vorzugsweise im Bereich dessen größten Durchmessers, und gleichzeitig durch das Rohr 2 und den Längsdübel 21 hindurch, der zu diesem Zweck eine entsprechende Querbohrung aufweist. Der Querdübel 5' erstreckt sich vorzugsweise von der einen bis zur anderen Seite des Rohres 2 und durchdringt dessen Wandung auf beiden Seiten.

### BEZUGSZEICHENLISTE

- 1: Bambusrohr
- 2: Bambusrohr
- 3: Längseinsatzteil
- 4: Längsschraube
- 4a: Kopfteil
- 5: Querdübel
- 6: Mutter
- 7: Befestigungsschraube
- 8: Mutterschraube
- 9: Längsbohrung
- 10: Längsrichtung
- 11: Ebene
- 12: Außengewinde
- 13: Quereinsatzteil
- 14: Wandöffnung
- 15: Quereinsatzteil
- 16: Beilagscheibe
- 17: Stirnplatte
- 19 20: Querbohrung
- 21: Längsdübel

## Patentansprüche

1. Bambusrohrverbindung mit
- einem ersten Bambusrohr (1), welches stumpf auf ein hierzu im Winkel stehendes zweites Bambusrohr (2) trifft, wobei
- im Endbereich wenigstens des ersten Bambusrohres (1) ein Längseinsatzteil (3) befestigt ist und
- ein Längsverbinder vorhanden ist, der das Längseinsatzteil (3) des ersten Bambusrohres (1) mit dem anderen Bambusrohr (2) wenigstens indirekt lösbar verbindet,
**dadurch gekennzeichnet, daß**
das Längseinsatzteil (3) im ersten Bambusrohr (1) in Längsrichtung so positioniert ist, daß bei miteinander verbundenem ersten und zweiten Bambusrohr (1, 2) das zweite Bambusrohr (2) mit seiner Mantelfläche gegen die ihm zugewandte Stirnfläche des Längseinsatzteiles (3) gedrückt wird.

2. Bambusrohrverbindung nach Anspruch 1,
**dadurch gekennzeichnet, daß**
das zweite Bambusrohr (2) gegenüber der freien Stirnfläche des ersten Bambusrohres (1) einen Abstand einhält.

3. Bambusrohrverbindung nach einem der vorherigen Ansprüche
**dadurch gekennzeichnet, daß**
der Längsverbinder in Längsrichtung (10) des das Längseinsatzteil (3) tragenden Bambusrohres (1) angeordnet ist, und insbesondere der Längsverbinder zentrisch in dem das Längseinsatzteil (3) tragenden Bambusrohr (1) angeordnet ist, und insbesondere das Längseinsatzteil (3) mit dem Bambusrohr (1), insbesondere mit dessen Innenumfang, verklebt und/oder formschlüssig verbunden, insbesondere über ein Querelement, insbesondere über wenigstens einen Querdübel (5), verbunden ist.

4. Bambusrohrverbindung nach einem der vorhergehenden Ansprüche,
**dadurch gekennzeichnet, daß**
im Inneren des zweiten Bambusrohres (2) in einer solchen Längsposition, die mit dem Längsverbinder, insbesondere der Längsschraube (4), des Längseinsatzteiles (3) des ersten Bambusrohres (1) fluchtet, ein Quereinsatzteil (15) angeordnet und mit dem Bambusrohr (2) fest verbunden ist, und insbesondere das Quereinsatzteil (15) mit dem zweiten Bambusrohr (2) durch von außen in das Bambusrohr (2) hindurchgeschraubte Befestigungsschrauben (7) befestigt und/oder verklebt ist.

5. Bambusrohrverbindung nach einem der vorhergehenden Ansprüche,
**dadurch gekennzeichnet, daß**
das Längseinsatzteil (3) und/oder das Quereinsatzteil (15) aus Holz, insbesondere aus Bambus, insbesondere aus mehreren verleimten Bambusstäben, besteht.

6. Bambusrohrverbindung nach einem der vorhergehenden Ansprüche,
**dadurch gekennzeichnet, daß**
der Längsverbinder drehfest mit dem Längseinsatzteil (3) verbunden ist, insbesondere mittels eines das erste Bambusrohr (1), das Längseinsatzteil (3) sowie den Längsverbinder gemeinsam durchdringenden Querdübels (5), und insbesondere der Längsverbinder in Querrichtung in das Innere des zweiten Bambusrohres (2) hineinragt und mit diesem drehfest, insbesondere formschlüssig, insbesondere mittels eines zweiten Querdübels (5') verbindbar ist.

7. Bambusrohrverbindung nach einem der vorhergehenden Ansprüche,
**dadurch gekennzeichnet, daß**
der Kopf (4a) der als Längsverbinder dienenden Längsschraube (4) auf der vom zweiten Bambusrohr (2) abgewandten Stirnseite des Längseinsatzteiles (3) sich abstützt und die auf die Längsschraube (4) aufschraubbare Mutter (6) sich an derjenigen Stirnfläche des Quereinsatzteiles (15) abstützt, welche vom ersten Bambusrohr (1) abgewandt ist, und insbesondere
- die Längsschraube (4) die Längsbohrung (9) des Längseinsatzteiles (3) lose durchdringt und wenigstens am freien Ende ihres Schachtes ein Außengewinde (12) aufweist, und
- daß die Mutter (6) mit dem Quereinsatzteil (15) drehfest, insbesondere die Mutter (6) mit dem Quereinsatzteil (15) durch Verschrauben mittels Muttemschrauben (8) drehfest verbunden ist.

8. Bambusrohrverbindung nach einem der vorhergehenden Ansprüche,
**dadurch gekennzeichnet, daß**
der Schaft der Längsschraube (4) drehfest mit dem Längseinsatzteil (3) verbindbar ist, insbesondere über in Längsrichtung gerichtete Vorsprünge, insbesondere Zacken zwischen miteinander in Kontakt tretende Stirnflächen des Längseinsatzteiles (3) und dem Kopf (4a) der Längsschraube (4), wobei die Mutter (6) gegenüber dem Quereinsatzteil (15) frei drehbar angeordnet ist.

9. Bambusrohrverbindung nach einem der vorhergehenden Ansprüche,
**dadurch gekennzeichnet, daß**
im Bereich des Schraubenkopfes (4a) der Längsschraube (4) in der Wandung des Bambusrohres (1) eine Wandöffnung (14) vorhanden ist.

10. Bambusrohrverbindung nach einem der vorhergehenden Ansprüche,
**dadurch gekennzeichnet, daß**
zwischen dem Schraubenkopf (4a) der Längsschraube (4) und diesen abstützenden Bauteil eine Beilagscheibe (16), insbesondere mit in Längsrichtung weisenden Vorsprüngen, insbesondere Zacken, welche gegen das abstützende Bauteil weisen, angeordnet ist.

11. Bambusrohrverbindung nach einem der vorhergehenden Ansprüche,
**dadurch gekennzeichnet, daß**
die Mutter (6) sich an der vom zweiten Bambusrohr (2) abgewandten Stirnfläche des Längseinsatzteiles (3) abstützt, und insbesondere der Schraubenkopf (4a) der Längsschraube (4) sich an der von dem Längseinsatzteil (3) und damit dem ersten Bambusrohr (1) abgewandten Seite der äußeren Mantelfläche des zweiten Bambusrohres (2) abstützt und die Längsschraube (4) das zweite Bambusrohr (2) vollständig durch entsprechende Querbohrungen (19) hindurch durchdringt.

12. Bambusrohrverbindung nach einem der vorhergehenden Ansprüche,
**dadurch gekennzeichnet, daß**
der Schraubenkopf (4a) sich auf der Innenseite der Wandung des zweiten Bambusrohres (4) abstützt und das zweite Bambusrohr (2) nur an der dem Einsatzteil (1) zugewandten Seite durchdringt.

13. Bambusrohrverbindung nach einem der vorhergehenden Ansprüche,
**dadurch gekennzeichnet, daß**
das Längseinsatzteil (3) sowohl im Bereich des ersten Bambusrohres (1) als auch im Bereich des zweiten Bambusrohres (2) jeweils von wenigstens einem Querdübel (5) durchdrungen wird, welcher auch jeweils wenigstens eine Wandung des jeweiligen Bambusrohres (1, 2) durchdringt und an dessen Außenumfang endet, und insbesondere das Längseinsatzteil (3) mit einem der Bambusrohre (1, 2) verklebt ist.

14. Bambusrohrverbindung nach einem der vorhergehenden Ansprüche,
**dadurch gekennzeichnet, daß**
mehrere aus jeweils einem ersten und einem zweiten Bambusrohr (1, 2) bestehende Eckverbindungen in wenigstens zwei Ebenen übereinander angeordnet sind und in den Berührungsebenen zwischen zwei solchen Eckverbindungen jeweils ein Montagewinkel angeordnet ist, und der Montagewinkel eine Querschnittskontur in Form einer nach außen weisenden V-Form aufweist, die im Winkel zwischen zwei aneinander liegenden Rohren liegt.

## Claims

1. The bamboo joint with
- a first bamboo cane (1) which bears obliquely against a second bamboo cane (2), which out of this reason has a slanting position, where
- an incorporated longitudinal component (3) is mounted at least to the end of the first bamboo cane (1) and
- where is a longitudinal joint, which joins at least in an indirectly removable manner the incorporated longitudinal component (3) of the first bamboo cane (1) to the other bamboo cane (2),
**characterized in that**
the incorporated longitudinal component (3) is thus arranged in the longitudinal direction inside the first bamboo cane (1) that, with respect to the first and the second joined together bamboo canes (1, 2), the second bamboo cane (2) to be pressed with its outer layer against the groove like depression shaped front side of the incorporated longitudinal component (3).

2. The bamboo joint according to claim 1,
**characterized in that**
there is a clearance between the second bamboo cane (2) and the front free surface of the first bamboo cane (1).

3. The bamboo joint according to any one of the preceding claims,
**characterized in that**
the longitudinal joint is arranged in the longitudinal direction (10) of the bamboo cane (1) having the incorporated longitudinal component (3), and in particular the longitudinal joint is centrally arranged inside the bamboo cane (1) having the incorporated longitudinal component (3), and in particular the incorporated longitudinal component (3) is stuck and/or form assembled, in particular by means of a transverse element, and in particular with at least one transverse dowel (5) to the bamboo cane (1), in particular to its internal circumference.

4. The bamboo joint according to any one of the preceding claims,
**characterized in that**
inside the second bamboo cane (2), arranged into such a transverse position, aligned with the longitudinal joint, in particular with the longitudinal screw (4), of the incorporated longitudinal component (3) of the first bamboo cane (1), is mounted an incorporated transverse component (15) which is fixedly secured and/or stuck to the bamboo cane (2), and in particular the incorporated transverse component (15) is secured to the second bamboo cane (2) by means of fixing bolts (7) screwed from the outside on the bamboo cane (2).

5. The bamboo joint according to any one of the preceding claims,
**characterized in that**
the incorporated longitudinal component (3) and/or the incorporated transverse component (15) are made of wood, in particular of bamboo, in particular of several glued bamboo sticks.

6. The bamboo joint according to any one of the preceding claims,
**characterized in that**
the longitudinal dowel is mounted to the incorporated longitudinal component (3) so that to have a resistance to torsion, in particular by means of a transverse dowel (5), which penetrates the first bamboo cane (1) both through the incorporated longitudinal component (3) and the longitudinal dowel, and in particular the longitudinal dowel reaches inside the second bamboo cane (2) and may be mounted to it so that to have a resistance to torsion, in particular only form assembled, in particular by means of a second transverse dowel (5').

7. The bamboo joint according to any one of the preceding claims,
**characterized in that**
the head (4a) of the longitudinal screw (4) used as longitudinal joint, bears against the back side, opposite to the second bamboo cane (2), of the incorporated longitudinal component (3) and the nut (6), screwed on the longitudinal screw (4), bears against that back side of the incorporated transverse component (15), which is opposite to the first bamboo cane (1), and in particular
- the longitudinal screw (4) penetrates the longitudinal bore hole (9) of the incorporated longitudinal component (3) and has at the free end of the rod at least one external thread (12), and
- the nut (6) is secured to the incorporated transverse component (15) so that to have a resistance to torsion, and in particular the nut (6) is secured to the incorporated transverse component (15) by means of the nut bolts (8).

8. The bamboo joint according to any one of the preceding claims,
**characterized in that**
longitudinal screw (4), be mounted to the incorporated longitudinal component (3) so that to have a resistance to torsion, in particular by means of prominences and in particular cogs, which engage between the back surface of the incorporated longitudinal component (3) and the head (4a) of the longitudinal screw (4), where the nut (6) may rotate with respect to the incorporated transverse component (15).

9. The bamboo joint according to any one of the preceding claims,
c**haracterized in that**
there is an opening (14) in the wall of the bamboo cane (1) in the area of the head (4a) of the longitudinal screw (4).

10. The bamboo joint according to any one of the preceding claims,
**characterized in that**
between the head (4a) of the longitudinal screw (4) and the incorporated longitudinal component supporting it, there is arranged a rove (16), in particular having prominences oriented in the transverse direction and in particular cogs oriented in the direction of the incorporated longitudinal component.

11. The bamboo joint according to any one of the preceding claims,
**characterized in that**
the nut (6) bears against the back surface, opposite to the second bamboo cane (2), of the incorporated longitudinal component (3), and in particular the head (4a) of the longitudinal screw (4) bears against the opposite side to the incorporated longitudinal component (3) and thus opposite to the first bamboo cane (1) too, the opposite side being the surface of the outer layer of the second bamboo cane (2), the longitudinal screw (4) penetrating completely the second bamboo cane (2) through appropriate transverse bore holes (19).

12. The bamboo joint according to any one of the preceding claims,
**characterized in that**
the head (4a) of the longitudinal screw bears against the inner layer of the wall of the second bamboo cane (2) and penetrates the second bamboo cane (2) only on the side of the incorporated longitudinal component (3).

13. The bamboo joint according to any one of the preceding claims,
**characterized in that**
the incorporated longitudinal component (3) is penetrated both in the area of the first bamboo cane (1) and in the area of the second bamboo cane (2) by at least one transverse dowel (5), which penetrates every time at least an inner layer of every bamboo cane (1, 2) and ends on the external circumference of this, and in particular the incorporated longitudinal component (3) is stuck to one of the bamboo canes (1, 2).

14. The bamboo joint according to any one of the preceding claims,
**characterized in that**
several corner joints, consisting of a first and a second bamboo cane (1, 2), are arranged in at least two superimposed planes having arranged an assembly angle at the contact surfaces between two such corner joints, and the assembly angle has a V shaped transverse contour pointing outwards and which is slantingly arranged between two adjoining canes.

## Revendications

1. Le joint démontable comportant
- un tube de bambou (1) recevant obliquement un tube de bambou (2), qui de ce fait tombe en angle droit;
- une composante longitudinale incorporée (3), fixée à l'extrémité au moins du tube (1);
- un joint longitudinal qui réalise au moins le lien indirecte et démontable entre la composante longitudinale incorporée (3) au tube (1) et le tube (2),
**caracterisé en ce que**
la composante longitudinale incorporée (3) est positionnée en direction longitudinale à l'intérieur du tube (1) de façon à ce que, par rapport aux tubes (1) et (2), attachés l'un à l'autre, la paroi extérieure du tube (2) soit pressée contre la face frontale de ladite composante longitudinale (3).

2. Le joint démontable selon la revendication précédente
**caractérisé en ce que**
il y a un espace entre le tube (2) et la face frontale libre du tube (1).

3. Le joint démontable selon l'une des revendications précédentes
**caracterisé en ce que**
le joint longitudinal est positionné sur l'axe central longitudinal (10) du tube de bambou (1) auquel on a préalablement incorporé la composante longitudinale (3), qui est collée et/ou raccordée au tube (1), notamment à la paroi intérieure dudit tube uniquement au moyen d'un organe, le plus souvent représenté par une composante transversale, notamment par une cheville transversale (5).

4. Le joint démontable selon l'une des revendications précédentes
**caractérisé en ce que**
à l'interieur du tube de bambou (2), fixée en direction longitudinale et en alignement avec la vis longitudinale (4) insérée dans la composante longitudinale (3) incorporée au tube (1), une composante transversale incorporée (15) est montée de façon à réaliser une fixation solidaire au tube (2), les moyens de fixation de ladite composante transversale (15) incorporée au tube (2) pouvant être réalisés par collage ou par un boulon (7), vissé à partir de l'extérieur dudit tube (2).

5. Le joint démontable selon l'une des revendications précédentes
**caracterisé en ce que**
la composante longitudinale incorporée (3) et/ou la composante transversale incorporée (15) sont faites en bois, notamment en bois de bambou, plusieurs cannes de bambou étant collées l'une à l'autre.

6. Le joint démontable selon l'une des revendications précédentes
**caractérisé en ce que**
le joint transversal est attaché à la composante longitudinale incorporée (3) le plus souvent au moyen d'une cheville transversale (5) de façon à opposer une résistance à la torsion, ladite cheville transversale perçant le tube (1), la composante longitudinale incorporée (3), ainsi que le joint longitudinal, plus particulièrement ledit joint longitudinal est introduit en plan transversal à l'intérieur du tube (2) en réalisant un lien résistant à la torsion, il s'agit plus particulièrement d'un emboîtement au moyen d'un organe, notamment une seconde cheville transversale (5').

7. Le joint démontable selon l'une des revendications précédentes
**caracterisé en ce que**
la tête (4a) de la vis longitudinale (4) qui sert de lien longitudinal prend appui sur la face frontale, opposée au tube (2), de la composante longitudinale incorporée (3) et l'écrou (6), vissé dans la vis longitudinale (4) vient prendre appui sur ladite face frontale de la composante transversale incorporée (15), opposée au tube (1), plus particulièrement
- la tige /vis longitudinale (4) perce l'évidement (9) serti en plan longitudinal dans ladite composante longitudinale incorporée (3) et dont au moins l'extrémité libre est filetée;
- l'écrou (6) est attaché à la composante transversale incorporée (15) de manière à assurer une solidarisation résistante à la torsion, les moyens de solidarisation dudit écrou avec la composante transversale incorporée (15) étant réalisés par les boulons (8).

8. Le joint démontable selon l'une des revendications précédentes
**caracterisé en ce que**
la tige de la vis peut être montée à la composante longitudinale incorporée (3) de manière à opposer une résistance à la torsion, le montage étant réalisé au moyen de proéminences, notamment des dents disposées le long des faces frontales de ladite composante longitudinale, lesdites dents s'engageant les unes aux autres et à la tête (4a) de la vis longitudinale (4), l'écrou (6) pouvant tourner librement par rapport à la composante transversale incorporée (15).

9. Le joint démontable selon l'une des revendications précédentes
**caractérisé en ce que**
la paroi du tube (1) porte un orifice (14) dans la zone de la tête (4a) de la vis longitudinale (4).

10. Le joint démontable selon l'une des revendications précédentes,
**caractérisé en ce que**
entre la tête (4a) de la vis longitudinale (4) et la composante longitudinale incorporée qui en fournit le support il y a une rondelle (16) présentant des proéminences orientées dans le plan transversal, notamment des dents orientées dans la direction de ladite composante longitudinale.

11. Le joint démontable selon l'une des revendications précédentes,
**caracterisé en ce que**
l'écrou (6) vient prendre appui sur la face frontale, opposée par rapport au tube (2), de la composante longitudinale incorporée (3), la tête (4a) de la vis longitudinale (4) prenant appui elle-même sur la face opposée de ladite composante longitudinale (3) et donc opposée au tube (1), la face opposée étant constituée par la paroi extérieure du tube (2), tandis que la vis longitudinale (4) perce de part et d'autre le tube de bambou (2) au moyen des perçages transversaux appropriés.

12. Le joint démontable selon l'une des revendications précédentes,
**caractérisé en ce que**
la tête (4a) de la vis vient prendre appui sur la paroi intérieure du tube (2), perçant ledit tube (2) uniquement dans la face opposée à la composante longitudinale incorporée (3).

13. Le joint démontable selon l'une des revendications précédentes,
**caracterisé en ce que**
la composante longitudinale incorporée (3) est traversée aussi bien dans la zone du tube (1) que dans la zone du tube (2) par au moins une cheville transversale (5), qui perce chaque fois au moins l'une des deux parois intérieures des tubes (1) et (2) et se termine à la circonférence extérieure dudit tube, ladite composante longitudinale étant collée à l'un des tubes (1) ou (2).

14. Le joint démontable selon l'une des revendications précédentes,
**caractérisé en ce que**
plusieurs joints d'angle constitués d'un tube (1) et d'un tube (2) sont fixés au moins sur deux plans différents, avec, entre les surfaces de contact de deux tels joints, une cornière en V s'ouvrant vers l'extérieur et montée entre deux tubes attachés.
